Europäisches Patentamt

**European Patent Office**

**Office européen des brevets**

(11) Publication number: **0 061 875**
**A2**

(12) # EUROPEAN PATENT APPLICATION

(21) Application number: **82301432.9**

(22) Date of filing: **19.03.82**

(51) Int. Cl.³: **F 16 H 5/12**

(30) Priority: **01.04.81 GB 8110183**

(43) Date of publication of application:
**06.10.82 Bulletin 82/40**

(84) Designated Contracting States:
**BE DE FR GB IT SE**

(71) Applicant: **AUTOMOTIVE PRODUCTS PUBLIC LIMITED COMPANY**
**Tachbrook Road**
**Leamington Spa Warwickshire CV31 3ER(GB)**

(72) Inventor: **Webster, Henry George**
**The Old School House Barrowfield Lane**
**Kenilworth Warwickshire(GB)**

(72) Inventor: **Burke, John Pius**
**27 Acacia Road**
**Leamington Spa Warwickshire(GB)**

(74) Representative: **Adkins, Michael**
**Withers & Rogers 4 Dyer's Buildings**
**Holborn London, EC1N 2JT(GB)**

(54) **An actuator.**

(57) An actuator comprises an output member 4 a piston 6 for driving the output member and a cushioning spring 8 through which the piston 6 transmits its drive. The piston is arranged so that it loads the spring 8 in one direction when moving the output member in that direction and loads the spring 8 in the opposite direction when moving the output member in said opposite direction. A return spring 16 is provided for moving the output member back towards a neutral position N after being moved from the neutral by the piston.

FIG. 1

EP 0 061 875 A2

MA/TL

AN ACTUATOR
———————————

The invention relates to an actuator and is particularly but not
exclusively concerned with an actuator for a ratio selector fork of a
synchromesh change-speed gearing.  In particular the actuator is of a type
in which a driving member transmits drive to an output member through cushioning
means.

Hitherto various actuators of the foregoing kind have been proposed,
for example in British Patent Specification numbers 744,578 and 1,122,274.
The actuator described in No. 744578 merely enables a gear ratio selector to
occupy either one of two positions whilst in the other patent a complex
arrangement of two springs and associated pistons is described to effect
cushioning in both directions of movement of the output member.

An object of the present invention is to provide an improved actuator
and according to the invention there is provided an actuator comprising
an output member, a driving member for moving the output member and cushioning
means through which the drive is transmitted from the driving member to the
ouput member, said driving member being arranged to load the cushioning
means in one direction when moving the output member in that direction and to
load said cushioning means in the opposite direction when moving the output
member in said opposite direction, characterised in that the output member is movable in either direction from a neutral position towards which it is normally biased by resilient means. With such an arrangement the actuator requires only one driving member to effect cushioned movement of the output member in both directions and the provision of the resilient means ensures that the output member will always return to a neutral position. In that way, a selector fork operated by the output member will maintain a selector sleeve of a synchromesh change-speed gearing in a neutral position until either one of two ratios is selected.

The driving member is preferably a fluid operable annular piston arranged in a cylinder, said output member being coaxial with and passing slidably through said piston.

The resilient means may be a coil spring arranged in the said cylinder coaxially with the piston. That particular arrangement is particularly compact as both the cushioning means and the coil spring are housed in the same cylinder. Preferably one end of the coil spring reacts against the output member when the piston drives the output member in said one direction away from the neutral, and the other end reacts against the piston when the piston drives the output member in said opposite direction away from the neutral, the coil spring in each case also reacting against abutment means on the cylinder. In such a case the coil spring may react against the output member through a cylindrical element which extends coaxially within the coil spring towards the piston and which includes an outwardly directed annular abutment at one end which engages the coil spring and an inwardly directed annular abutment at the other end which engages the output member.

In preferred embodiments the cushioning means comprises a comprehensive spring housed within an axial bore in the annular piston, the compression spring being disposed between a pair of pressure plates which are slidably mounted in said bore and which are urged by said compression spring against abutments on said output member. The compression spring may comprise a plurality of coaxial Belleville washers.

The invention also includes a synchromesh change-speed gearing including a ratio selector fork connected to an output member of an actuator according to any of the three immediately preceding paragraphs.

Actuators in accordance with the invention will now be described by way of example with reference to the accompanying drawings in which Figure 1 is a longitudinal cross section through one type of actuator, and Figures 2 and 3 are longitudinal cross sections through alternative types of actuator.

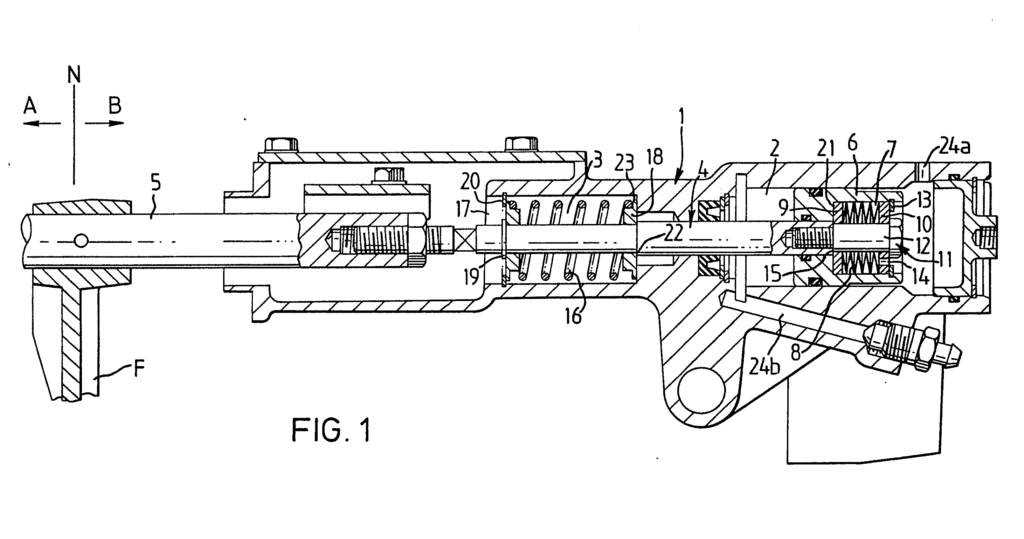

In Figure 1 there is shown a housing formed with a cylinder 2 and a coaxial bore 3. The housing slidably supports an output member 4 connected to a pushrod 5. The pushrod, in use, is connected to a ratio selector fork F of a synchromesh change speed gearing (not shown).

The cylinder 2 houses a piston 6 which is slidable on the output member 4. The piston is formed with a coaxial bore 7 which houses a spring 8 comprising a stack of Belleville washers arranged between annular washers 9, 10 (constituting the aforesaid pressure plates). The output member 4 includes a bolt 11 having an unthreaded section 12 which passes with working clearance through the washers 9, 10. The washer 10 is urged by spring 8 against the head of bolt 11, is engageable with an internal circlip 13 in the bore 7 and is formed with an aperture 14 for operating fluid. The washer 9 is urged by spring 8 against a shoulder 15 on the output member and is engageable with an annular shoulder 21 at the left hand end of the bore 7.

The bore 3 houses a return spring 16 which is mounted on two stepped washers 17, 18. The washer 17 abuts an external circlip 19 on the member and an internal circlip 20 in the bore. The washer 18 abuts a shoulder 22 on the output member and an annular shoulder 23 at the right hand end of the bore 3 as viewed in the drawings. The spring 16 normally maintains the pushrod in the position shown which corresponds to the neutral position N of the selector fork.

In order to shift the fork to select one gear ratio fluid is directed under pressure to cylinder 2 to the right of the piston 6 through a port 24a so as to urge the piston to the left. Fluid to the left of the piston exhausts through a port 24b. Movement of thepiston is transmitted to the output member through the circlip 13, washer 10, spring 8 washer 9 and shoulder 15. As the output member shifts away from the neutral in direction A, the selector fork begins to load the synchromesh components and, therefore, resists further movement of the piston. However, the piston continues to travel and compresses the spring 8 further until synchronism is achieved. The load in spring 8 then pushes the output member fully to the left to achieve full engagement of the selected ratio. Such movement of the output member urges the washer 18 to the left to compress the return spring 16. On relieving fluid pressure to the right of the piston, the return spring urges the output member back to the neutral position.

To select the other gear ratio, fluid is directed under pressure to the cylinder 2 to the left of the piston 6 through port 24b and fluid to the right of the piston exhausts through port 24a. The incoming fluid urges the piston to the right and movement of the piston is transmitted to the output member through the shoulder 21, washer 9, spring 8 washer 10 and the head of bolt 11. Such movement urges the output member away from the neutral position in direction B to select the other ratio. Movement of the output member in that direction urges washer 17 to the right to compress spring 18. Relief of the fluid pressure will enable the return spring to urge the output member back towards its neutral position.

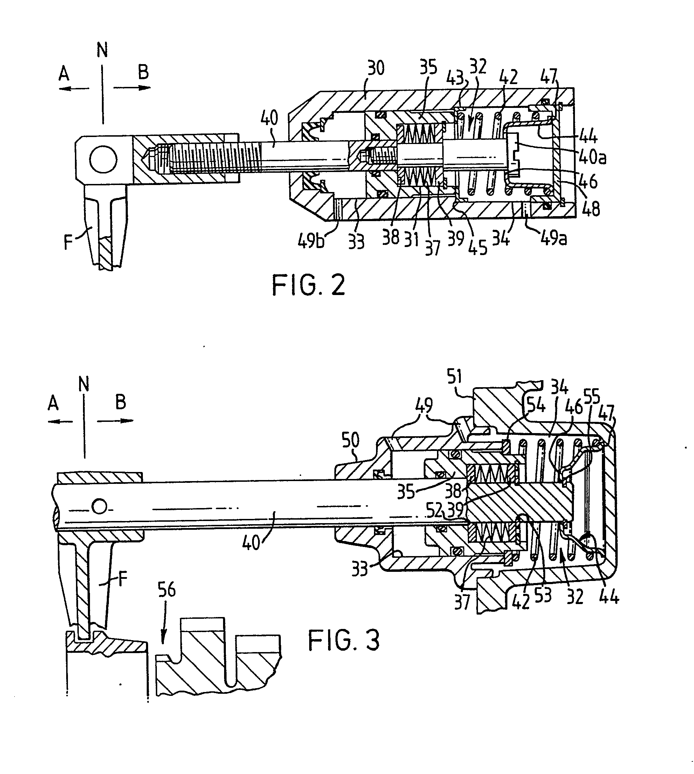

Figure 2 shows another form of actuator in accordance with the invention and which operates in a manner similar to that in Figure 1. The actuator includes a housing 30 defining a cylinder 32 having first and second portions 33, 34. A piston 35 similar to piston 6 of Figure 1 and housing an identical Belleville washer spring 37 and washers 38, 9 in a bore 31 is slidable in cylinder portion 33 and is slidably mounted on an output member 40. A return spring 42 is arranged in cylinder portion 34 and is mounted between a cup washer 43 and a cylindrical element 44. The washer 43 abuts a shoulder 45 defined between the cylinder portions 33, 34. The cylindrical element 44 has an inwardly directed lip 46 in abutment with a screw head 40 of the output member and has an outwardly directed lip 47 which engages the spring 42. In the position shown the lip 47 also abuts a closure plate 48 for the cylinder 32. The output member 40 is connected to a selector fork F.

The operation of the actuator of Figure 2 follows that of Figure 1 so that fluid entering cylinder 32 through a port 49a to the right of the piston 35 urges the piston to the left to transmit drive to the output member 40 through the spring 37. The selector fork F is therefore moved from neutral position N in direction of arrow A. Fluid to the left of the piston exhausts through a port 49b. As the output member 40 moves it takes with it the cylindrical element 44 and compresses the return spring 42. When fluid pressure is relieved the return spring 42 moves the output member back to its neutral position. Movement the output member to the right from the position shown in Figure 2 can be effected by introducing fluid into the cylinder 32 through port 49b. The fork F is then moved in direction of arrow B from the neutral position and fluid exhausts through port 49a. The return spring 42 is compressed by the piston through cup washer 43. On relieving the fluid pressure, the return spring urges the piston to the left so that the output member and fork move back to the neutral position N.

Figure 3 shows an actuator similar to Figure 2 and parts corresponding to parts in Figure 2 have the same reference numerals.

The housing comprises two sections 50, 51 suitably secured together. The housing defines a cylinder 32 having first and second portions 33, 34. As in Figure 2 a piston 35 having a Belleville washer spring 37 between washers 38, 39 in a bore 31 is slidably mounted on an output member 40. The washer 38 is urged by the Belleville washers 37 normally against an abutment 52 on the output member 42 whilst the washer 39 is urged against an external circlip 53 on the output member. The return spring 42 is again arranged in cylinder portion 34. The return spring is disposed between a washer 54, which abuts the adjacent end of housing section 50, and an outwardly directed lip 47 of a generally cylindrical element 44. The element 44 has its inwardly directed lip 46 in abutment with an external circlip 55 on the output member 40. The outwardly directed lip 47 abuts the housing section 51 when the output shaft 40 is in the position shown. The operation of the actuator is the same as that shown in Figure 2, ports for the fluid being indicated at 49a and 49b. The output member carries a selector fork F for selecting ratio of a synchromesh gearing indicated generally at 56.

The washer 39 in Figures 2 and 3 may be formed with a bore similar to bore 14 in washer 10 of Figure 1.

The actuators of Figures 2 and 3 are particularly compact as both the piston and return spring are arranged in the same cylinder 32. Such an arrangement is simple to manufacture and assemble. Moreover the use of a single return spring to move the output member back to its starting position after moving in either direction is simple and effective.

The cushioning effect of the springs 8, 37 is particularly useful in avoiding baulking of the synchronizers and enables synchronism to occur naturally - an important characteristic if excessive wear of synchro components is to be avoided. However, use of the actuator is not limited to synchromesh change-speed gearing and could be used in other applications where cushioned movement of an output member is required.

CLAIMS

1.    An actuator comprising an output member (4;40), a driving member
(6;35) for moving the output member and cushioning means (8;37) through which
the drive is transmitted from the driving  member to the output member,
said driving member being arranged to load the cushioning means in one direction
when moving the output member in that direction and to load said cushioning
means in the opposite direction when moving the output member in said
opposite direction, characterised in that the output member (4;40) is movable
in either direction from a neutral position towards which it is normally
biased by return means (16;42).

2.    An actuator according to claim 1 characterised in that the driving
member is a fluid-operable annular piston (6;35) arranged in a cylinder
(2;32), said output member (4;40) being coaxial with and passing slidably
through said piston.

3.    An actuator according to claim 2 characterised in that the return
means is a coil spring (42) arranged in said cylinder (32) coaxially with
the piston.

4.    An actuator according to claim 3 characterised in that one end of
the coil spring (42) reacts against the output member (40) when the piston
(35) drives the output member in said one direction away from the neutral,
and the other end reacts against the piston when the piston drives the output
member i  said opposite direction away from the neutral, the coil spring
(42) in each case also reacting against abutment means (45,48) on the cylinder.

5.      An actuator according to claim 4 characterised in that the coil spring (42) reacts against the output member (40) through a cylindrical element (44) which extends coaxially within the coil spring towards the piston (35) and which includes an outwardly directed annular abutment (47) at one end which engages the coil spring and an inwardly directed annular abutment (46) at the other end which engages the output member.

6.      An actuator according to any of claims 2 to 5 characterised in that the cushioning means comprises a compression spring (8;37) housed within an axial bore (7;31) in the annular piston (6;35), the compression spring being disposed between a pair of pressure plates (9,10; 38,39) which are slidably mounted in said bore and which are urged by said compression spring against abutment on said output member.

7.      An actuator according to claim 6 characterised in that the compresssion spring comprises a plurality of coaxial Belleville washers.

8.      A synchromesh change-speed gearing including a ratio selector fork connected to an output member of an actuator according to any preceding claim.

FIG. 1

0061875

0061875

2/2

FIG. 2

FIG. 3